# EUROPÄISCHE PATENTSCHRIFT

(11) **EP 1 272 433 B1**
(45) Veröffentlichungstag und Bekanntmachung des Hinweises auf die Patenterteilung: **02.01.2004**
(21) Anmeldenummer: 01921283.6
(22) Anmeldetag: 21.02.2001
(51) Int. Cl.: C02F 5/08

(54) **SCHWEFELFREIES LIGNIN UND DESSEN DERIVATE ZUR HERABSETZUNG DER BILDUNG VON SCHLEIM UND ABLAGERUNGEN IN INDUSTRIELLEN ANLAGEN**
SULPHUR-FREE LIGNIN AND DERIVATIVES THEREOF FOR REDUCING THE FORMATION OF SLIME AND DEPOSITS IN INDUSTRIAL PLANTS
LIGNINE EXEMPTE DE SOUFRE ET SES DERIVES SERVANT A REDUIRE LA FORMATION DE DEPOTS DANS DES INSTALLATIONS INDUSTRIELLES

(30) Priorität: 16.03.2000 DE 10012894; 05.04.2000 DE 10017012
(43) Veröffentlichungstag der Anmeldung: 08.01.2003
(73) Patentinhaber: TFM Handels AG, 7000 Chur (CH)
(72) Erfinder: OBERKOFLER, Jörg, A-5020 Salzburg (AT); SPEDDING, Jeff, A-5026 Salzburg (AT)
(74) Vertreter: Schwarzensteiner, Marie-Luise, Dr.
(86) Internationale Anmeldenummer: PCT/EP2001/001972
(87) Internationale Veröffentlichungsnummer: WO 2001/068530

(56) Entgegenhaltungen:
- US-A- 3 841 887
- US-A- 3 910 873
- US-A- 5 543 058
- US-A- 5 807 952

## Beschreibung

Die vorliegende Erfindung betrifft ein Verfahren zur Reduktion der Bildung von Schleim und Ablagerungen in geschlossenen bzw. teilgeschlossenen wässrigen oder wasserführenden Systemen. Das Verfahren is bei in Vorratsbehältern gelagerten wässigen Lösungen, Emulsionen und Suspensionen, industriellen Anlagen, in welchen Wasser im Kreislauf geführt wird, wie beispielsweise Papiermaschinen oder Kühlwasserkreisläufen, anwendbar.

Mikroorganismen der einen oder anderen Art finden in Wasserkreisläufen und/oder Behältern industrieller Systeme typischerweise ideale Wachstumsbedingungen vor. Die jeweiligen Bedingungen dort beeinflussen die Art der Mikroorganismen. Das Kreislaufwasser, und hier besonders das Siebwasser, wie es in Papiermaschinen genannt wird, wurde in den vergangenen Jahren vermehrt einem Recycling und einer Schließung der Kreisläufe unterzogen. Diese Veränderungen führen bezüglich Temperatur, pH-Wert, Nährstoffangebot usw. in vermehrtem Umfang zu idealen Bedingungen für extensives Wachstum von Mikroorganismen. Viele dieser Organismen tendieren zur Bildung von Schleimkolonien, anstatt einzelne frei dispergierte Einheiten zu bilden, was zu fortschreitendem Wachstum von Schleimablagerungen im Kreislauf führt.

Darüber hinaus haben auch verschiedene Zusätze wie z.B. natürliche oder synthetische Polymere, Füllstoffe oder andere fein verteilte Bestandteile, die bei der Herstellung von Papier verwendet werden, die Tendenz, Ablagerungen in den Siebwasserkreisläufen zu bilden. Klarerweise kann die Kombination von Schleim mikrobiellen Ursprungs und diesen zusätzlichen Ablagerungen zu noch gravierenderen Problemen führen.

Weiters ist es auch von Bedeutung, daß auf spezielle Art und Weise gefiltertes oder behandeltes Kreislaufwasser oder auch Frischwasser in Papiermaschinen oft zur Herstellung von Sprühwasser oder Wasserstrahlen verwendet wird, die dazu dienen, Schaum abzuschwächen, den Aufbau von Ablagerungen aus Papierfasern und Füllstoffen in kritischen Regionen zu verhindern oder die Breite der nassen Papierbahn zu bestimmen. An der Zwischenphase zwischen diesem Sprühwasser und dem eigentlichen Siebwasserkreislauf, wo beispielsweise kaltes, sauerstoffreiches Frischwasser auf warmes, nährstoffreiches Kreislaufwasser trifft, können spezifische Bedingungen vorherrschen, die dem Wachstum von Mikroorganismen - und hier insbesondere filamentöser Formen - sehr förderlich sind. Das selbe trifft in ähnlicher Weise auch auf Stellen zu, an denen sich das Wasser verschiedener Kreisläufe mischt.

Die Ablösung dieser Ablagerungen von Wänden und anderen Strukturen im Kreislauf in das Siebwasser, entweder direkt auf die sich bewegende Papiermaschine oder sogar auf die Papierbahn, führt zu Beschädigungen oder Löchern im Papier und kann einen Riß des Papiers verursachen, was einen Maschinenstillstand nach sich zieht.

Bedeutende Mengen an Bioziden werden dem Siebwasser zugefügt, um diese Ablagerungsprobleme zu bekämpfen. Aufgrund der Verschiedenheit und der Flexibilität der Mikroorganismen, zu welchen nicht nur Bakterien, sondern auch Pilze zählen, ist die Wahl des Biozids nicht einfach. Aufgrund der Anpassungsfähigkeit von Mikroorganismen ist es außerordentlich schwer, ihr Wachstum auf ein "sicheres" oder störungsfreies Niveau zu senken. Die einzige effektiv Art einer Kontrolle mikrobieller Ablagerungen mit Hilfe von Bioziden ist der Versuch, praktisch alle dieser Organismen zu töten. Die Komplexität der Systeme und auch die notwendigen Service-Kontrollen führen dazu, daß eine wirkungsvolle Behandlung nicht billig ist.

Aufgrund verschiedener Notwendigkeiten, und oft auch aufgrund des gesetzlicher Bestimmungen, sind Biozide normalerweise abbaubar, so daß sie bei normalen Einsatzmengen keine Probleme für die Umwelt oder für die Funktion von nachfolgenden Abwasser- bzw. Kläranlagen verursachen. Andererseits stellen sie eine potentielle Gefahr im Umgang, beim Transport und bei zufälligem Mißbrauch dar.

Aus Gründen verbesserter Wirksamkeit, des Umweltschutzes und aus Kostengründen ist es seit langem ein Ziel der Papierindustrie, die Verwendung von Bioziden durch den Einsatz anderer Methoden zu reduzieren.

Ein bekanntes Verfahren zur Verminderung von Schleimablagerungen, ist die Zugabe von Lignosulfonaten zum Papiermaschinen-Siebwasser. Es wird auch in Kombination mit Bioziden verwendet, wobei dies eine Reduktion der eingesetzten Biozidmenge erlaubt. Diese Verfahren sind in den europäischen Patentschriften 0 185 963 und 0 496 905 beschrieben.

Aufgabe der vorliegenden Erfindung ist es, die Wirksamkeit der Schleim- und Ablagerungskontrolle zu steigern und gleichzeitig die Auswirkungen auf die Umwelt zumindest auf gleichem Niveau zu halten oder sogar zu vermindern.

Überraschenderweise konnte diese Aufgabe dadurch gelöst werden, daß man gemäß Anspruch 1 der vorliegenden Anmeldung, dem System schwefelfreies Lignin oder ein Derivat davon in einer Menge zugibt, die proportional zu der Menge an in dem Wasser vorhandenen, Schleim verursachenden Substanzen ist. Bevorzugte Ausführungsformen ergeben sich aus den Ansprüchen 2 und 3.

Bei einem Vergleich von löslichen aromatischen, von Lignin oder dessen Derivaten abgeleiteten Polymeren stellte sich nämlich heraus, daß das schwefelfreie Lignin und die Ligninderivate, welche erfindungsgemäß angewendet werden, bei der Verhinderung und Reduktion von Schleim- und Belagbildung in Systemen, in denen Papiermaschinen-Siebwasser im Kreislauf geführt wird, effektiver sind als die momentan angewendeten Lignosulfonate.

Darüber hinaus besitzen die erfindungsgemäß angewendeten Produkte, da sie im wesentlichen nicht-toxisch sind, eindeutig die geforderten Vorteile für die Umwelt im Vergleich zu Bioziden.

Bei einem Verfahren zur Produktion von Zellstoff-Fasern , das als "Soda"-Zellstoff-Verfahren bekannt ist, enthält der resultierende flüssige Abfall, die sogenannte Schwarzlauge, Substanzen aus dem Lignin-Abbau in Form carboxylierter Ligninderivate. Eine abgewandelte Form dieses Verfahrens ist als "Soda-Anthrachinon- oder Soda-AQ-Verfahren" bekannt. Diese Methoden eignen sich sehr gut zur Verarbeitung von nicht holzhaltigen Materialien, typischerweise einjährigen Pflanzen, wie Stroh, Flachs und Hanf.

Bei einem weiteren Verfahren zur Herstellung gereinigter, löslicher polymerer Substanzen durch temperatur- und pH-abhängige Fällung - wie z.B. in der WO 89/00512 "Verfahren zur Aufbereitung von aromatische Polymere enthaltenden alkalischen Lösungen" beschrieben ist - können spezifische Fraktionen carboxylierter Ligninderivate hergestellt werden. Bei diesem Verfahren wird die Schwarzlauge auf relativ niedrige Temperatur gebracht und auf ein bestimmtes Niveau, bei dem die Ausfällung stattfindet, angesäuert. Die Ansäuerung geht typischerweise bis zu einem pH-Wert von ca. 1-2 Einheiten unter dem pH-Wert des Umschlagpunkts der Titration der Schwarzlauge mit einer Säure. Die Viskosität der resultierenden Mischung erreicht typischerweise bei diesem pH-Wert knapp unter dem Umschlagpunkt ein Maximum und ist normalerweise so hoch, daß die Abtrennung des präzipitierten Lignins durch Filtration oder Zentrifugation kommerziell nicht durchführbar ist. Diese Mischung wird jedoch anschließend auf eine bestimmte Temperatur, die von der Art der Schwarzlauge abhängt, aufgeheizt, wobei die Viskosität der flüssigen Mischung so stark abnimmt, daß eine erfolgreiche Abtrennung des carboxylierten Lignins durch industriell machbare Methoden möglich wird.

Durch Kontrolle des Rohmaterials und der Verfahrensbedingungen können sowohl im Soda-Anthrachinon-Verfahren als auch bei der Fällung von carboxyliertem Lignin die Qualität und die Eigenschaften der carboxylierten Ligninderivate auf spezifische Art und Weise beeinflußt werden.

Bei einem weiteren Verfahren, bei dem unter Verwendung von Tetramethylammoniumhydroxid (TMAH) als Kochlauge aus Holz stammendes Pflanzenmaterial zur Herstellung von Zellstoff verwendet wird, erhält man schwefelfreies Lignin, welches durch Ausfällung gereinigt werden kann. Dieses Lignin ist niedermolekular und im alkalischen Bereich in Wasser löslich.

Lignosulfonate, einschließlich der kommerziellen Produkte, die zum Zweck der Schleimkontrolle angeboten werden, besitzen bestimmte strukturelle Charakteristika, die darin bestehen, daß sich die Sulfonatgruppen an der C3 Seitenkette der molekularen Phenylpropan- Grundeinheit des Lignins befinden. Die untersuchten kommerziellen Lignosulfonat-Schleimbekämpfungsprodukte weisen einen Schwefelgehalt von ca. 5-6% auf. Der Anteil an Carboxylgruppen kommerzieller Lignosulfonate ist normalerweise in der Literatur nicht angeführt, aber es ist bekannt, daß sie schwierig zu reinigen sind und Uronsäure enthalten können. Dies bedeutet, daß etwaige vorhandene Carboxylgruppen nicht mit der Lignin-Grundeinheit verbunden sein müssen. Die Lokalisierung irgendwelcher Carboxylgruppen innerhalb einer Lignosulfonat-Einheit ist, laut Literatur, nicht wirklich klar. Es wurde vorgeschlagen, daß sie sich an den C1 oder C5 Positionen des Rings befinden sollten. Nach Sarkanen (Sarkanen and Ludwig, "Lignins", John Wiley & Sons, 1971) sind die Beweise dafür jedoch nicht sehr überzeugend.

Carboxylierte Ligninderivate von einjährigen Pflanzen, welche erfindungsgemäß angewendet werden, haben typischerweise einen Carboxylgehalt von 5-7% und einen Schwefelgehalt von typischerweise weniger als 0.05%. Folgt man der Literatur, stammen beispielsweise die -COOH-Gruppen in Lignin aus Gräsern von Cumarinsäuregruppen und zu einem geringeren Anteil aus Feruleinsäuregruppen (Shimada, Fukuzuka und Higuchi, Tappi 54 (1) 72-78 (1971)). Das deutet darauf hin, daß die Carboxylgruppen sich an aliphatischen Seitenketten und nicht am Ring befinden.

Es ist also klar, daß carboxyliertes Lignin, auf das im Verfahren dieser Erfindung Bezug genommen wird, eine andere molekulare Struktur und auch eine andere chemische Zusammensetzung aufweist als die Lignosulfonate, und daß diese Unterschiede für die unterschiedliche Leistung dieser Produkte verantwortlich sein müssen.

Bei Zugabe einer bestimmten Menge Natriumhydroxid werden die carboxylierten Ligninderivate wasserlöslich; mit einer ausreichenden Menge Alkali, typischerweise 4-10% NaOH bezogen auf carboxyliertes Lignin, hat beispielsweise eine 33%ige Lösung eine Viskosität von 500 cPs bei pH 9 und 40cPs bei pH 12, wodurch ein Produkt entsteht, das einen für den kommerziellen Einsatz geeigneten Gehalt an Aktivsubstanz mit einer Viskosität, die einfache Dosierung und nachfolgendes Vermischen mit dem zu behandelnden Siebwasser erlaubt, vereint.

Das hier verwendete alkali-lösliche Lignin, das man bei der TMAH-Behandlung von Holz erhält, besitzt ein Molekulargewicht von 1000 oder geringfügig höher und ist im wesentliche schwefelfrei. Daraus wird klar, daß dieses Lignin ebenfalls eine andere chemische Struktur und Zusammensetzung aufweist als die Lignosulfonate und daß diese Unterschiede für die unterschiedliche Leistung dieser Produkte verantwortlich sein müssen. Die genaue Struktur dieser Art von Lignin ist noch nicht ausreichend untersucht, aber es ist bekannt, daß ein bestimmter Grad an Carboxylierung vorhanden ist, und es kann vorgeschlagen werden, daß die Grundstrukturen des carboxylierten Lignins aus dem an einjährigem Pflanzenmaterial durchgeführten Soda-Verfahren und des TMAH-Lignin aus Holz einander nicht unähnlich sind, sich aber beide deutlich von derjenigen von Lignosulfonaten unterscheiden.

Obwohl im Rahmen der vorliegenden Patentanmeldung stets nur von schwefelfreiem Lignin oder von schwefelfreiem, carboxyliertem Lignin die Rede ist, soll festgehalten werden, daß ein wichtiger Faktor für die Leistungsfähigkeit der Produkte, deren Wasserlöslichkeit ist. Es ist somit denkbar, daß auch andere wasserlösliche Ligninderivate, die schwefelfrei sind, erfindungsgemäß eingesetzt werden könnten, z.B. phosphonierte oder nitrierte Produkte.

Bei bestimmten, mehr Füllstoff enthaltenden Papiersorten, besonders wenn der Füllstoff eine Art von Calciumcarbonat ist, kann der Papiermaschinenkreislauf anfälliger für die Bildung von Ablagerungen sein, wobei diese Ablagerungen - ob ursprünglich verursacht durch mikrobielle Aktivität oder chemische Bedingungen ist eine offene Frage - besonders reich an Carbonat sind, oft auch in Kombination mit Material biologischen Ursprungs.

Überraschenderweise stellte sich heraus, daß eine gleichzeitige Verwendung bestimmter Komplexbildner mit dem schwefelfreien Lignin oder den Lignin-Derivaten aus dieser Erfindung - entweder getrennt oder als Mischung zum Papiermaschinen-Siebwasser zugesetzt - die Verhinderung oder Reduktion von Schleim und Ablagerungen, die sich im Siebwasser-Kreislauf bilden, signifikant verbessert.

Genauer gesagt ergab eine Lösung von Polyasparaginsäure (-Na Salz), zu einem kleineren Anteil in einer gelösten Mixtur mit dem carboxylierten Lignin dieser Erfindung gemischt, signifikant gute Ergebnisse bei der Behandlung von Schleim und Ablagerungen. Der Vorteil von Polyasparaginat im Vergleich zu anderen verfügbaren Komplexbildnern, z.B. Polyacrylaten, ist, daß es einen hohen Grad an biologischer Abbaubarkeit besitzt, was einen ökologischen Vorteil darstellt.

Auf diese Art und Weise kann das Produkt aus dieser Erfindung spezifisch zugeschnitten auf die Anforderungen des jeweiligen Problems hergestellt werden.

Bei der Herstellung von Cellulose-Fasern aus nicht holzhaltigen Quellen, wie Stroh, Hanf oder Flachs, entstehen lange, starke Fasern, die für bestimmte Papiersorten Vorteile bringen. Die resultierende Schwarzlauge aus der Faserherstellung, einschließlich des Soda-AQ-Verfahrens, enthält jedoch normalerweise große Mengen an Silica. Dies bedeutet, daß die konventionelle Entsorgung der ligninhaltigen Schwarzlauge, z.B. durch Konzentration und Verbrennung als Brennstoff nicht möglich ist, so daß der Abfall oft mit negativen Konsequenzen für die Umwelt entsorgt wird. Die Verwendung von Schwarzlauge aus dem Soda-AQ-Verfahren zur Herstellung des Produkts aus dieser Erfindung bringt daher klare zusätzliche Vorteile für die Umwelt.

Darüber hinaus entstehen durch das Soda-AQ-Verfahren keine schwefelhaltigen Abwässer oder Gase, was ebenfalls einen deutlichen Vorteil für die Umwelt gegenüber einigen anderen Methoden der Faserherstellung bringt.

Gemäß dem Verfahren dieser Erfindung angewendet, werden das schwefelfreie Lignin oder die Ligninderivate, wie carboxyliertes Lignin, bei Zugabemengen (bezogen auf den Gehalt an aktivem Produkt) von typischerweise 0.1 g/m³ bis 1.8g/m³ Kreislaufwasser oder Papiermaschinen-Siebwasser verwendet. Dies ergibt üblicherweise auch 10 g/t bis 180 g/t , bezogen auf den Feststoffgehalt des Papierstoff enthaltenden Mediums, wenn der Feststoffgehalt des Dünnstoffs im Stoffauflauf auf das Sieb ungefähr 1% beträgt. Das carboxylierte Lignin wird als konzentrierte Lösung kontinuierlich über 24 Stunden direkt zum Siebwasser einer Papiermaschine zugesetzt.

Wenn beispielsweise für Papierstoff mit hohem Anteil an Carbonat-Füllstoff zusätzlich ein Komplexbildner, z.B. Polyasparaginat, mit dem schwefelfreien Lignin gemischt wird, kann die Menge an aktivem Komplexbildner, berechnet als Prozentanteil des schwefelfreien Lignins, das in der Produktflüssigkeit vorhanden ist, typischerweise 5-25% vorzugsweise 10 bis 20 %, betragen, wobei eine besonders wirkungsvolle Konzentration bei 15% liegt. Diese Mischung wird ebenfalls kontinuierlich dem Siebwasser zugesetzt.

Die Zusammensetzung von Papierstoff beinhaltet üblicherweise den Zusatz von Recycling-Papier oder Ausschuß, die einige Zeit als nasser, konzentrierter Stoff gelagert werden können, oder auch von Prozesswasser, das unter halb-statischen Bedingungen gelagert wird. Wiederaufbereiteter Ausschuß kann 20-30% des Stoffs, der zur Papiererzeugung verwendet wird, ausmachen. Solche Stoffe können nicht nur aufgrund der Lagerbedingungen anfällig für biologischen Abbau sein, sondern auch aufgrund hoher Mengen an Nährstoffen wie, z.B. Stärke, und können eine bedeutende Quelle für Kontaminationen der Haupt-Siebwasser-Kreisläufe in Papiermaschinen sein. In solchen Fällen können Biozide eingesetzt werden, um den Ausschuß während der Lagerung zu konservieren, was gängige Praxis ist. In Bezug auf das Verfahren dieser Erfindung können geringe Mengen eines geeigneten Biozids zu Papierstoffen oder Siebwasser zugegeben werden, um die Wirkung des schwefelfreien Lignins zu ergänzen. Typischerweise ist das verwendete Biozidlevel viel geringer als in Siebwasser-Kreisläufen, die nur mit Biozid gegen Schleimablagerungen behandelt werden.

Falls Papierstoffe, zu deren Herstellung zum Beispiel potentiell mikrobiell kontaminierter Ausschuß verwendet wird, behandelt werden sollen, und - als Teil des Verfahrens dieser Erfindung - ein geringfügiger Zusatz von Biozid zusätzlich zum schwefelfreien Lignin vorgenommen werden soll, kann eine Menge von 10 bis 180 g/t oder mehr, typischerweise 50-100 g/t, bezogen auf den Feststoffgehalt des Papierstoff enthaltenden Mediums, zugegeben werden. Eine Menge von 70 g/t erwies sich als besonders effektiv. Das Biozid kann periodisch, nicht kontinuierlich, an einer Stelle, an der Dickstoffe miteinander vermischt werden, oder direkt in den Siebwasserkreislauf zugegeben werden. Die Zeiten, während derer Biozid zugegeben wird, können sich auf typischerweise 10-30% der gesamten Behandlungszeit belaufen, beispielsweise je eine Stunde Biozid-Zugabe alle sechs Stunden, wobei das schwefelfreie Lignin kontinuierlich über 24 Stunden zugegeben wird. Unter den Bioziden, die in Kombination mit dem schwefelfreien Lignin in dem Verfahren dieser Erfindung eine gute Wirksamkeit aufweisen, befinden sich 3,5-Dimethyl-tetrahydro-1,3,5-thiadiazin-2-thion, Methylen-bis-thiocyanat, Carbamate, 2,2-Dibrom-3-nitril-propionamid und 2-Brom-2-nitropropan-1,3-diol. Das Biozid 2-Brom-2-nitropropan-1,3-diol, das als 20%ige Lösung eingesetzt werden kann, ist als zusätzliches Biozid besonders wirksam bei einer Einsatzmenge von beispielsweise 70 g/t. Biozide mit einem längerandauernden Hemm-Effekt haben sich in Kombination mit schwefelfreiem Lignin als effektiver erwiesen als Kombinationen mit kurzlebigen "Killer"- oder sterilisierenden Bioziden.

Um die Effekte verschiedener Systeme zur Schleim- und Ablagerungskontrolle zu quantifizieren, wurde eine kleine Versuchsanlage, wie sie in Diagramm 1 zu sehen ist, verwendet. Diese Anlage wird beispielsweise mit frischem Papiermaschinen-Siebwasser versorgt. Der zentrale Kreislauf wird mit Siebwasser befüllt und dieses wird im Kreislauf geführt. Die Temperatur wird so eingestellt, daß sie der in einer typischen Papiermaschine entspricht. Frischwasser oder Klarfiltrat können zur Verdünnung und spezifisch als Sprühwasser eingesetzt werden. In einem Nebengefäß werden zumindest zwei Schleimmeßbrettchen dem Kreislaufwasser ausgesetzt, wobei eines völlig eingetaucht bleibt und das andere zur Hälfte aus dem Wasser ragt. Die Bretthälfte in der Luft kann bei bestimmten Temperaturen kontinuierlich mit Frisch- oder Prozesswasser besprüht werden, um die Sprühwasserbereiche in den Papiermaschinen zu simulieren. Wegen dieser Zusätze fließt ein ähnliches Volumen in den Ablauf über. Die gesamte Einheit kann, wenn notwendig, in der Nähe einer Papiermaschine aufgestellt werden. Alle Parameter, wie Temperatur, pH-Wert, gelöster Sauerstoff, Strömung, Zusatz von Additiven, Intensität des einfallenden Lichts, Luftfeuchtigkeit usw., können kontrolliert und/oder gemessen werden.

Die Schleimmeßbrettchen haben ein bekanntes Gewicht und können periodisch überprüft und gewogen werden, um das Wachstum von Ablagerungen zu messen. Die Brettchen können auch getrocknet und dann gewogen werden, um das Trockengewicht des Schleims zu messen oder die chemische Zusammensetzung zu bestimmen.

Das schwefelfreie Lignin oder seine Derivate, wie carboxyliertes Lignin, und jegliche zusätzliche Komplexbildner oder Biozide, wie sie in dieser Erfindung vorgesehen sind, können in geeigneten Mengen dosiert und die Effekte gemessen werden. Auf diese Art war es möglich, zu zeigen, daß das schwefelfreie Lignin oder dessen Derivate in der Lage sind, die Aufgabe die dieser Erfindung zugrunde liegt, erfolgreich zu lösen.

### Beispiele

Produkte und Verfahren zu deren Herstellung:

### Beispiel 1: Herstellung von Schwarzlauge, welche schwefelfreie carboxylierte Ligninderivate enthält, aus Weizenstroh unter Verwendung eines Soda-AQ-Verfahrens.

Weizenstroh wurde eine Stunde lang bei 160°C in einem Druckreaktor mit 16% NaOH und 0.5% Anthrachinon - bezogen auf das Trockengewicht des Pflanzenmaterials - gekocht. Während des Abkühlens wurde der resultierende Stoff mit einem Minimum an Wasser gewaschen. Die Schwarzlauge wurde für weitere Behandlung aufbewahrt, um eine Fraktion von carboxylierten Ligninderivaten abzutrennen, die zur Verwendung im Verfahren dieser Erfindung bestimmt waren.

### Beispiel 2: Herstellung von Schwarzlauge, welche schwefelfreie carboxylierte Ligninderivate enthält, aus Flachsund Hanfstroh unter Verwendung eines Soda-AQ-Verfahrens.

Eine Mischung aus Flachs- und Hanfstroh wurde eine Stunde lang bei 160°C in einem Druckreaktor mit 16% NaOH und 0.5% Anthraquinon - bezogen auf das Trockengewicht des Pflanzenmaterials - gekocht. Während des Abkühlens wurde der resultierende Stoff mit einem Minimum an Wasser gewaschen. Die Schwarzlauge wurde für weitere Behandlung aufbewahrt, um eine Fraktion von carboxylierten Ligninderivaten abzutrennen, die zur Verwendung im Verfahren dieser Erfindung bestimmt waren.

### Beispiel 3: Herstellung von schwefelfreiem carboxyliertem Lignin aus Weizenstroh-Schwarzlauge durch einen Fällungs-Vorgang.

Es wurde Schwarzlauge von Weizenstroh-Zellstoff, die unter Verwendung des Soda-AQ-Verfahrens aus Beispiel 1 hergestellt wurde, verwendet. Die Lauge hatte einen Gehalt an organischen Stoffen, gemessen als CSB (Chemischer Sauerstoffbedarf), von 120 g/l, eine Gesamt-Basizität, ausgedrückt als g/l NaOH, von 18 g/l, einen Umschlagpunkt der Säuretitrationskurve bei pH 3 und die maximale Viskosität bei fortschreitender Ansäuerung bei pH 2. Die Schwarzlauge wurde auf 85°C erhitzt und mit Schwefelsäure bis zu einem pH-Wert von 1 angesäuert. Die so angesäuerte Lauge wurde durch eine Vakuum-Einheit filtriert, wobei die angesäuerte Lauge durch alle Arten von getesteten Papierfiltern ohne Abscheidungen auf dem Filter filtrierbar war.

Die selbe ursprüngliche Schwarzlauge wurde erst auf 35°C eingestellt und dann mit Schwefelsäure auf pH 1 gebracht. Die resultierende Mischung war so viskos, daß in einer Filtrationseinheit alle Arten von Filterpapieren fast sofort blockiert waren. Die Zentrifugation der Mischung ergab keine Abtrennung von Feststoffen.

Ein löslicher organischer Polyelektrolyt wurde verwendet, um die angesäuerte Mischung zu koagulieren. Diese wurde daraufhin durch aschefreies Filterpapier filtriert, wodurch das Präzipitat abgetrennt wurde. Nach der Lufttrocknung war der so gesammelte Feststoff schwarz und.hatte einen Aschegehalt von 25%, was vermutlich auf anorganische Salze, die im Präzipitat verblieben, zurückzuführen war.

In einem weiteren Experiment wurden 200 ml der ursprünglichen Schwarzlauge bei einer Temperatur von 35 °C bis pH 1 angesäuert, danach auf 85°C erhitzt und 10 min lang gemischt, wobei die Temperatur auf 85°C gehalten wurde. Der resultierende ausgefällte Slurry wurde auf 30°C abgekühlt und durch eine Vakuum-Filtrationseinheit mit einem Papierfilter filtriert. Die Filtration dauerte ungefähr 5 Minuten. Der resultierende Filterkuchen wurde mit 50 ml Wasser gewaschen, wobei das Wasser 4 Minuten brauchte, um den Filter zu passieren. Der Filterkuchen wurde bei 80°C getrocknet und ergab 8 g einer gelben Substanz, mit einem gemessenen Aschegehalt von 1%. Die Menge an Carboxylgruppen, gemessen in Milliequivalent, betrug 1 Milliequivalent pro g Feststoff. Die Menge organischer Substanzen im Filtrat, gemessen als CSB, betrug 68 g/l.

Das gelbe Material aus dem letzten Experiment wurde in dieser Form für Anwendungen in Bezug auf das Verfahren dieser Erfindung aufbewahrt.

### Beispiel 4: Herstellung von schwefelfreiem, carboxyliertem Lignin aus Flachs- und Hanfstroh-Schwarzlauge durch einen Fällungs- und Filtrations-Vorgang.

Es wurde Schwarzlauge von Flachs- und Hanfstroh-Zellstoff, die unter Verwendung des Soda-AQ-Verfahrens aus Beispiel 2 hergestellt wurde, verwendet. Die Lauge hatte einen Gehalt an organischen Stoffen, gemessen als CSB (Chemischer Sauerstoffbedarf), von 110 g/l, eine Gesamt-Basizität, ausgedrückt als g/l NaOH, von 18.3 g/l, einen Umschlagpunkt der Säuretitrationskurve bei pH 3.8 und die maximale Viskosität bei fortschreitender Ansäuerung bei pH 2.5. Die Temperatur der Schwarzlauge wurde auf 30°C eingestellt und durch den Zusatz von gasförmigem Kohlendioxid auf unter pH 7 gebracht, gefolgt von weiterer Ansäuerung auf pH 1 mittels Schwefelsäure, wobei die Temperatur beibehalten wurde. Die Mischung wurde im Folgenden langsam auf 85°C erhitzt und dann 10 min lang bei derselben Temperatur gehalten. Der resultierende ausgefällte Slurry wurde auf 30°C abgekühlt und unter Vakuum durch einen Papierfilter filtriert.

Die Filtration dauerte ungefähr 5 Minuten für je 200 ml Slurry, wobei jeweils ein neuer Filter verwendet wurde. Jeder Filterkuchen wurde mit 50 ml Wasser gewaschen, wobei das Wasser 5 Minuten brauchte, um den Filter zu passieren. Die Filterkuchen wurden gesammelt und bei 80°C getrocknet und ergaben eine gelbe Substanz mit einem Gesamtgewicht von 65g, einem Aschegehalt 0.8% und einem Gehalt an Carboxylgruppen, gemessen in Milliequivalent, von 1.2 Milliequivalent pro g Feststoff. Die Menge organischer Substanzen im Filtrat, gemessen als CSB, betrug 68 g/l.
Das carboxylierte Ligninderivat in Form eines getrockneten gelben Puders wurde für Anwendungen in Bezug auf das Verfahren dieser Erfindung aufbewahrt.

### Beispiel 5: Herstellung einer Lösung von schwefelfreiem, carboxyliertem Lignin, das ursprünglich aus Weizenstroh stammt.

Zu 500 g eines trockenen Filterkuchens von carboxyliertem Lignin, das wie in Beispiel 3 hergestellt wurde , wurden 1020 g Wasser und 38 g NaOH zugefügt. Diese Mischung wurde 24 h bei Raumtemperatur gemischt und durch Zellulosefaser-Filter vakuumfiltriert. Das Filtrat hatte bei Raumtemperatur einen Feststoffgehalt von 30%, einen pH von 10 und eine Viskosität von 85 cPs. Die Lösung wurde in dieser Form für die Anwendung bezüglich des Verfahrens dieser Erfindung aufbewahrt.

### Beispiel 6: Herstellung einer Lösung von schwefelfreiem, carboxyliertem Lignin, das ursprünglich aus Flachsund Hanfstroh stammt.

Zu 500 g eines trockenen Filterkuchens von carboxyliertem Lignin, das wie in Beispiel 4 hergestellt wurde, wurden 1100 g Wasser und 45 g NaOH zugefügt. Diese Mischung wurde 48 h bei Raumtemperatur gemischt und durch Zellulosefaser-Filter vakuumfiltriert. Das Filtrat hatte bei Raumtemperatur einen Feststoffgehalt von 31%, einen pH von 10.3 und eine Viskosität von 98 cPs. Die Lösung wurde in dieser Form für die Anwendung bezüglich des Verfahrens dieser Erfindung aufbewahrt.

### Beispiel 7: Mischung eines schwefelfreien, carboxylierten Ligninderivats mit Natrium- Polyasparaginat als Komplexbildner.

Zu 500 g der Lösung von carboxyliertem Lignin aus Beispiel 5 wurden 59 g einer 38%igen Na-Polyasparaginat-Lösung zugegeben (das Na-Polyasparaginat war ein Entwicklungsprodukt, Nummer TP OC 2401 von Bayer AG, Leverkusen). Die resultierende Mischung wurde eine Stunde lang gemischt und durch einen Zellulosefaser-Filter filtriert. Bei Raumtemperatur betrug der pH-Wert 9.5 und die Viskosität 78 cPs. Die Lösung wurde in dieser Form für die Anwendung im Verfahren dieser Erfindung aufbewahrt.

### Beispiel 8: Mischung eines schwefelfreien, carboxylierten Ligninderivats mit Natrium-Aspartat als Komplexbildner.

Zu 500 g der Lösung von carboxyliertem Lignin aus Beispiel 6 wurden 59 g einer 38%igen Na-Polyasparaginat-Lösung zugegeben (das Na-Polyasparaginat war ein Entwicklungsprodukt, Nummer TP OC 2401 der Bayer AG, Leverkusen). Die resultierende Mischung wurde eine Stunde lang gemischt und durch einen Zellulosefaser-Filter filtriert. Bei Raumtemperatur betrug der pH-Wert 9.9 und die Viskosität 90 cPs. Die Lösung wurde in dieser Form für die Anwendung im Verfahren dieser Erfindung aufbewahrt.

### Beispiel 9: Herstellung von schwefelfreiem Lignin aus Holz durch ein Tetramethylammoniumhydroxid-Zellstoff-Verfahren und darauffolgende Fällung.

Holzschnitzel wurden bei hoher Temperatur unter Druck in einer Lösung von Tetramethylammoniumhydroxid in einem Druckreaktor gekocht. Während des Abkühlens auf Raumtemperatur wurde der resultierende Zellstoff mit einer minimalen Wassermenge gewaschen; die Schwarzlauge wurde für weitere Behandlung aufbewahrt, um eine Fraktion von Ligninderivaten abzutrennen. Die Schwarzlauge wurde mit Salzsäure angesäuert und die Temperatur bis zu einem Punkt angehoben, bei dem das gefällte Lignin filtrierbar war. Nach der Filtration ergab das Lignin einen gelblichen, feuchten Kuchen. Das feuchte Lignin wurde in Wasser dispergiert; Natriumhydroxid wurde bis zu einem pH-Wert von 9.5 zugegeben, wobei sich nach einiger Zeit eine Lösung des Lignins bildete, welche filtriert wurde. Die resultierende Lösung von schwefelfreiem Lignin hatte einen Feststoffgehalt von 15% und wurde zur Anwendung bezüglich des Verfahrens dieser Erfindung bestimmt.

### Anwendungsbeispiele

### Beispiel 10: Verminderung von Schleim und Ablagerungen in einem System, in dem Papiermaschinen-Siebwasser im Kreislauf geführt wird, durch Behandlung mit einem schwefelfreien carboxylierten Ligninderivat.

Eine Reihe von 51-Containern wurde verwendet, um ein schwefelfreies carboxyliertes Ligninderivat, kommerziell erhältliche Lignosulfonate und Biozide auf ihre Wirkung auf die Bildung von Schleim und Ablagerungen zu überprüfen.

Das Siebwasser stammte aus dem Siebwasser I-Kreislauf einer Papiermaschine, die holzfreies Papier mit Carbonat-Füllstoff produziert, gestrichenen Ausschuß und Stärke zur Herstellung des Stoffs verwendet und bei leicht alkalischem pH läuft. Das Siebwasser wurde nach einem Neustart, bevor irgendwelche Schleimbekämpfungssysteme angewendet wurden, entnommen. Das Siebwasser hatte einen Feststoffgehalt von 4.6 g/l, von denen 3.0 g/l als Füllstoff (CaCO₃) bestimmt wurden. Sieben Tanks wurden bis zur 5 Liter-Markierung mit dem Siebwasser befüllt, die Magnetrührer wurden eingeschalten, ebenso die thermostatgesteuerten Heizsysteme, welche auf 36°C eingestellt wurden. Gewogene Schleimmeßbretter wurden völlig in die Flüssigkeit getaucht. Die mikrobielle Aktivität in den Versuchsbehältern wurde durch Ausplattieren auf Keimzahl-Agar der Firma Merck überprüft. Die zu vergleichenden Zusätze zur Schleimkontrolle wurden in geeigneter Weise verdünnt und eine bestimmte Menge wurde zu jedem Versuchsbehälter zugegeben. Nach 72 Stunden wurden die Keimzahlen neu bestimmt und die mit Schleim bedeckten Meßbretter sorgfältig gewogen. Nach den Messungen nach 72 Stunden wurden die Schleimmeßbretter bei 105°C getrocknet und erneut gewogen, um das Trockengewicht des abgelagerten Materials zu bestimmen. Das getrocknete Material wurde dann von den Brettern entfernt und in einem Ofen in Porzellanschalen bei 550°C verascht. Die Asche wurde zurückgewogen, um den Anteil mineralischer Substanzen in den ursprünglichen Ablagerungen zu messen. Das gesamte Experiment wurde mit verschiedenen Konzentrationen der einzelnen Schleimbekämpfungsprodukte wiederholt.

### Getestete Produkte:

1) kein Produkt (Kontrolle)
2) Lösung von schwefelfreiem, carboxyliertem Lignin aus Beispiel 5 (carboxyliertes Lignin aus Weizenstroh)
3) Lösung von schwefelfreiem, carboxyliertem Lignin aus Beispiel 6 (carboxyliertes Lignin aus Flachs/Hanfstroh)
4) Typ A, kommerzielle Ligninsulfonat-Lösung, wie sie für die Schleimbekämpfung in Papiermaschinen angewendet wird
5) Typ B, kommerzielle Ligninsulfonat-Lösung, wie sie als Dispergiermittel in der Bauindustrie angeboten wird
6) Kommerzielle Biozid-Lösung, die Methylen-bis-thiocyanat enthält
7) Kommerzielle Biozid-Lösung, die ein quaternäres Ammoniumsalz enthält

Wie aus der Tabelle 1 ersichtlich ist, ergaben diejenigen Versuchsansätze, in denen die Produkte mit schwefelfreiem, carboxyliertem Lignin aus den Beispielen 5 und 6 verwendet wurden, das niedrigste Trockengewicht der Ablagerungen. Vom praktischen Standpunkt aus gesehen noch bedeutsamer war, daß diese Ansätze auch den geringsten Feststoffgehalt in den Ablagerungen selbst aufwiesen. Es ist ein Erfahrungswert, daß sich solche Ablagerungen mit geringem Feststoffgehalt wesentlich einfacher mit Hilfe der Strömung dispergieren lassen und eine geringere Gefahr für die Leistung der Papiermaschine darstellen.

Die Kontrolle und die beiden Versuchsansätze, die mit Bioziden behandelt wurden, hatten den niedrigsten Aschegehalt. Dies deutete darauf hin, daß in diesen Ablagerungen ein stärkeres Wachstum von Organismen bzw. eine stärkere Koloniebildung insitu stattfand und nicht eine fortschreitende Ablagerung aller vorhandenen festen Substanzen. Schleime, die aus Kolonien von Mikroorganismen bestehen, können wegen der Schwierigkeiten, sie zu dispergieren, ein ernsthaftes Problem für die Papierherstellung darstellen.

Die Ergebnisse sind in Tabelle 1 zusammengefasst.

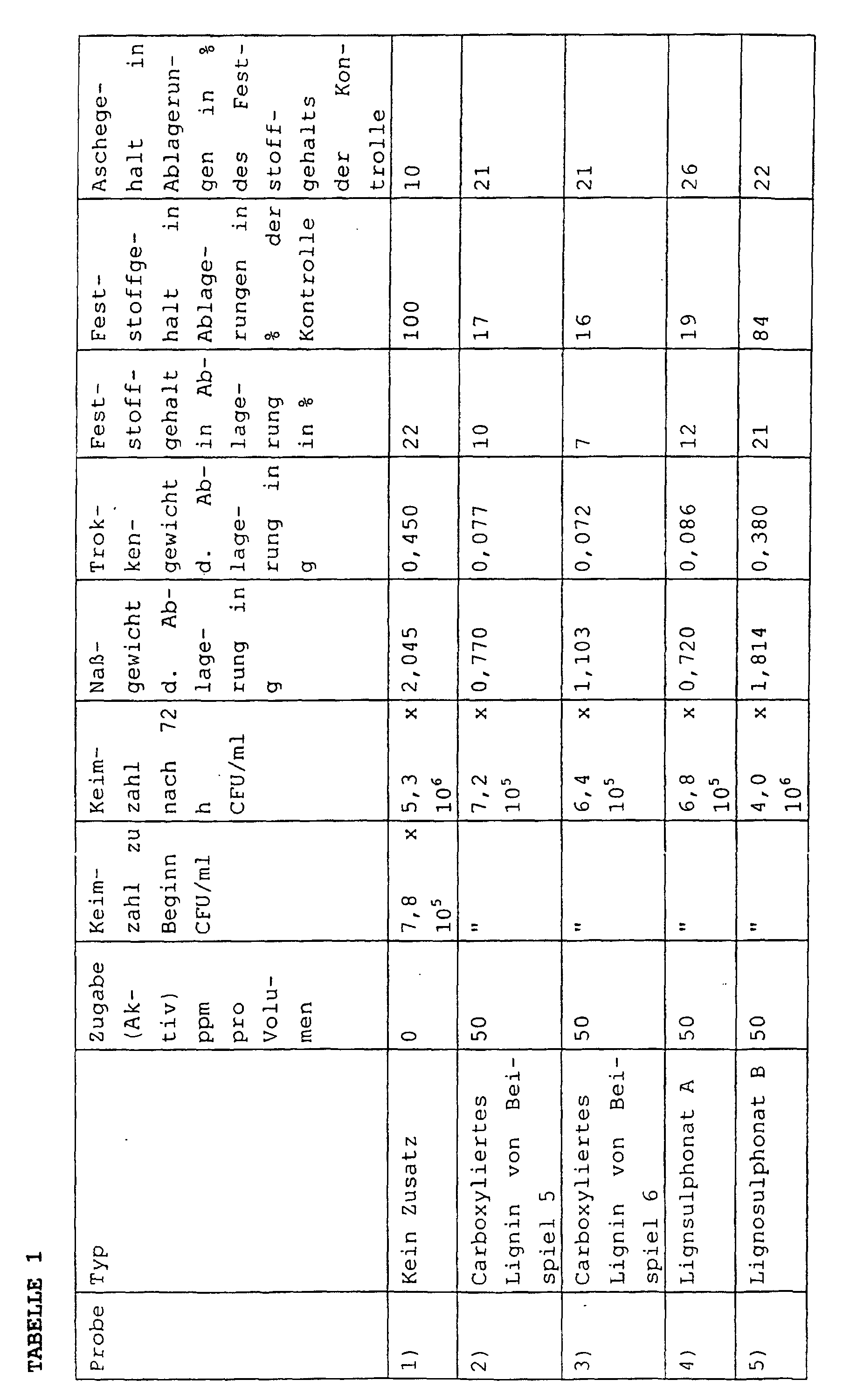

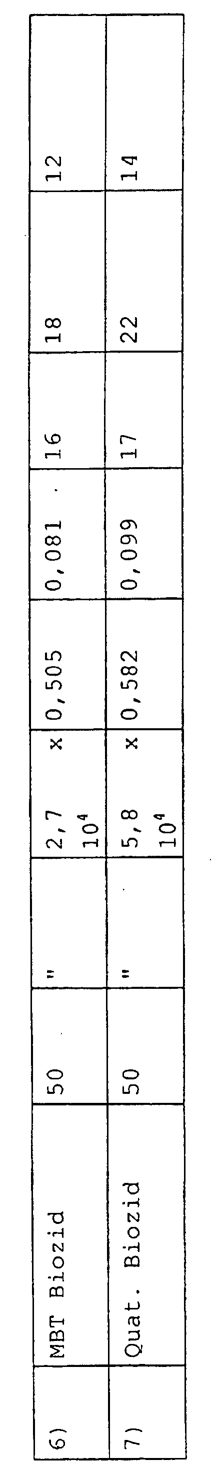

### Beispiel 11: Verminderung von Schleim und Ablagerungen in einem System, in dem Papiermaschinen-Siebwasser im Kreislauf geführt wird, durch Behandlung mit einer Mischung aus einem carboxylierten Ligninderivat und einem Komplexbildner.

Es wurde dasselbe Versuchsprotokoll wie in Beispiel 10 befolgt, allerdings unter Verwendung folgender Produkte:

### Getestete Produkte:

1) kein Produkt (Kontrolle)
2) Lösung von schwefelfreiem, carboxyliertem Lignin/Na-Polyasparaginat aus Beispiel 7 (carboxyliertes Lignin aus Weizenstroh)
3) Lösung von schwefelfreiem, carboxyliertem Lignin/Na-Polyasparaginat aus Beispiel 8 (carboxyliertes Lignin aus Flachs/Hanfstroh)
4) Lösung von schwefelfreiem, carboxyliertem Lignin aus Beispiel 5 (carboxyliertes Lignin aus Weizenstroh)
5) Lösung von schwefelfreiem, carboxyliertem Lignin aus Beispiel 6 (carboxyliertes Lignin aus Flachs/Hanfstroh)
6) Typ A, kommerzielle Ligninsulfonat-Lösung, wie sie für die Schleimbekämpfung in Papiermaschinen angewendet wird

Das verwendete Siebwasser hatte einen Feststoffgehalt von 4,1 g/l, von denen 2,9 g/l Carbonat-Füllstoff waren.

Wie aus dem Feststoffgehalt der Ablagerungen ersichtlich ist, ergaben die Produkte mit schwefelfreiem Lignin, wenn sie in Kombination mit einem Komplexbildner verwendet wurden, sogar ein noch geringeres Trockengewicht in den Ablagerungen, wobei die Ablagerungen sehr leicht mit geringer Strömung zu dispergieren waren.

Die Ergebnisse sind in Tabelle 2 zusammengefasst.

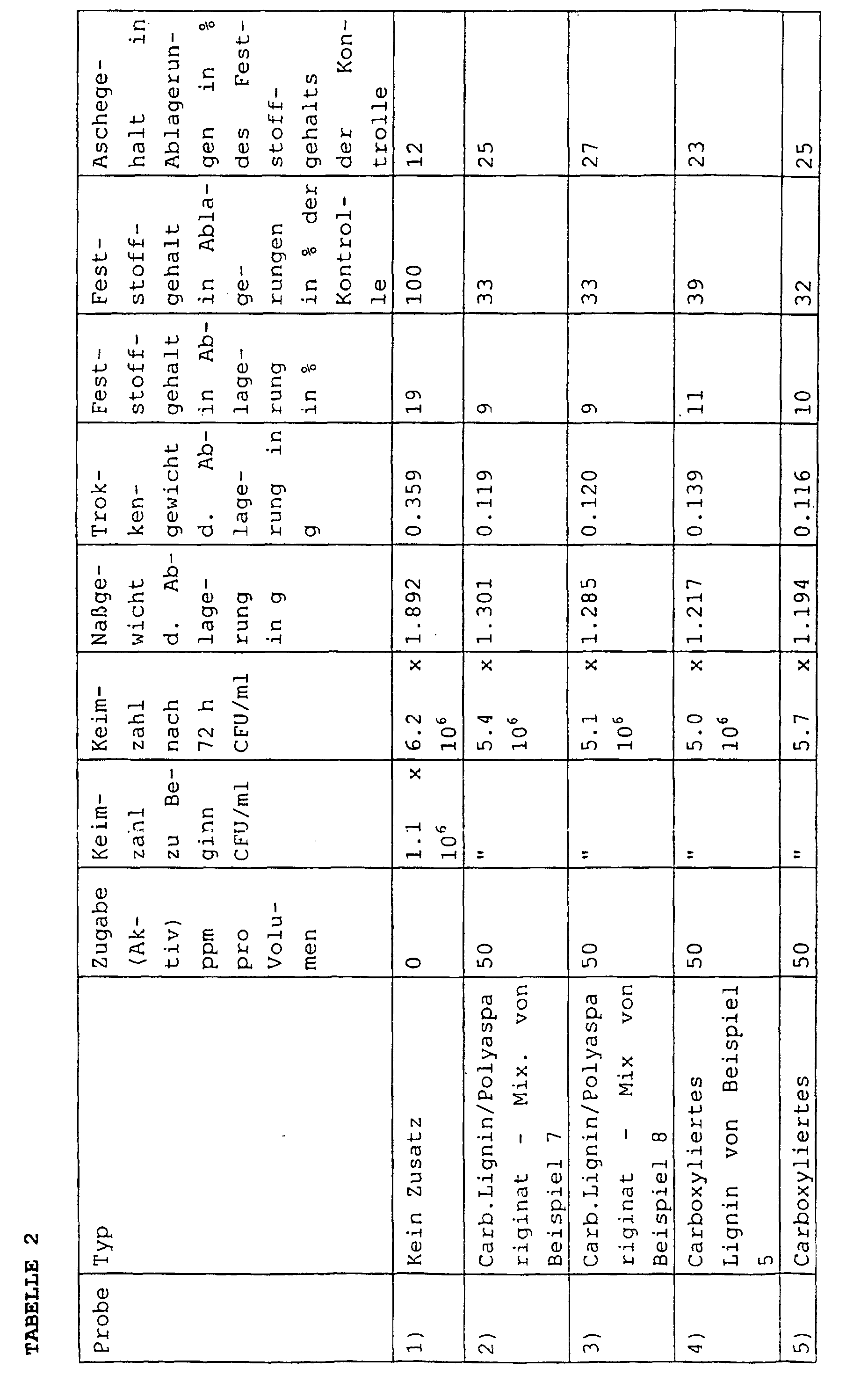

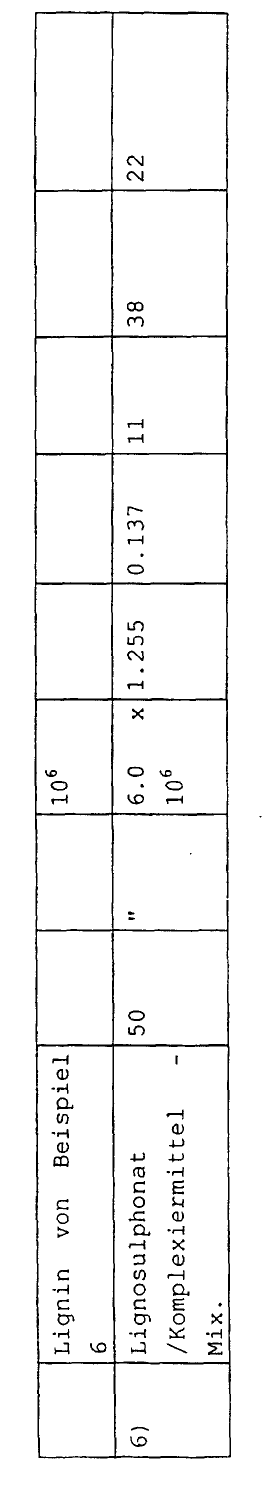

### Beispiel 12: Verminderung von Schleim und Ablagerungen in einem System, in dem Papiermaschinen-Siebwasser im Kreislauf geführt wird durch Behandlung mit einer Mischung aus einem schwefelfreiem, carboxylierten Ligninderivat und unter Zugabe einer kleinen Biozid-Menge.

Es wurde dasselbe Versuchsprotokoll wie in Beispiel 10 befolgt, allerdings unter Verwendung folgender Produkte:

### Getestete Produkte:

1) kein Produkt (Kontrolle)
2) Lösung von schwefelfreiem, carboxyliertem Lignin aus Beispiel 6 (carboxyliertes Lignin aus Flachs/Hanfstroh)
3) Lösung von schwefelfreiem, carboxyliertem Lignin aus Beispiel 6 plus dem Biozid 2-Brom-2-nitropropan-1,3-diol
4) 2-Brom-2-nitropropan-1,3-diol

Das verwendete Siebwasser hatte einen Feststoffgehalt von 4,7 g/l, von denen 3,2 g/l Carbonat-Füllstoff waren.

Bei diesem Experiment stellte es sich heraus, daß eine Kombination aus schwefelfreiem, carboxyliertem Lignin aus Beispiel 6 mit einer kleinen Menge des Biozids das geringste Trockengewicht der Ablagerungen ergibt.

Die Ergebnisse sind in Tabelle 3 zusammengefasst.

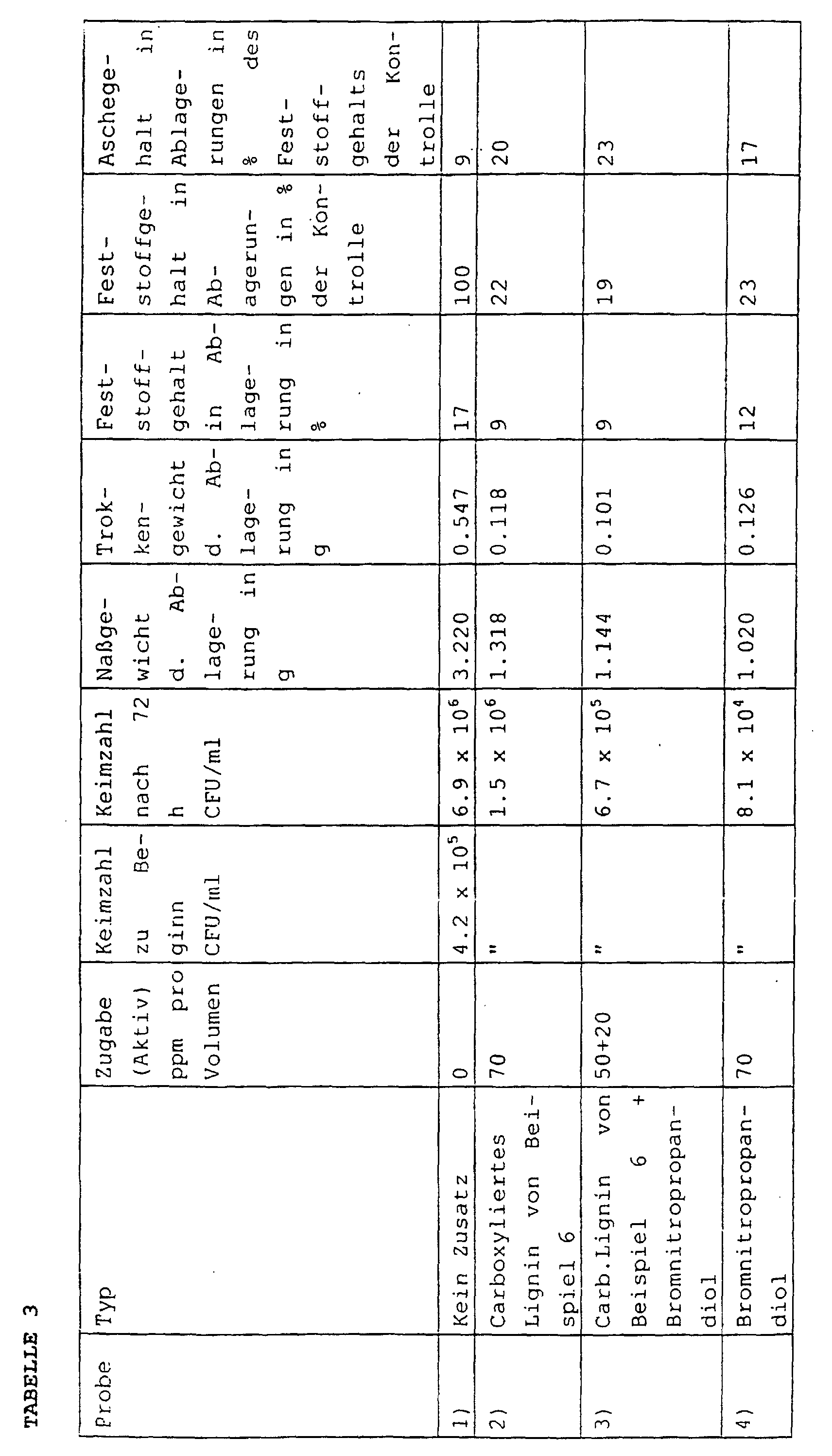

### Beispiel 13: Verminderung von Schleim und Ablagerungen in Sprühwasser-Regionen eines Systems. in dem Papiermaschinen-Siebwasser im Kreislauf geführt wird durch Behandlung des Sprühwassers mit einer Mischung aus einem schwefelfreiem, carboxylierten Ligninderivat und einem Komplexbildner.

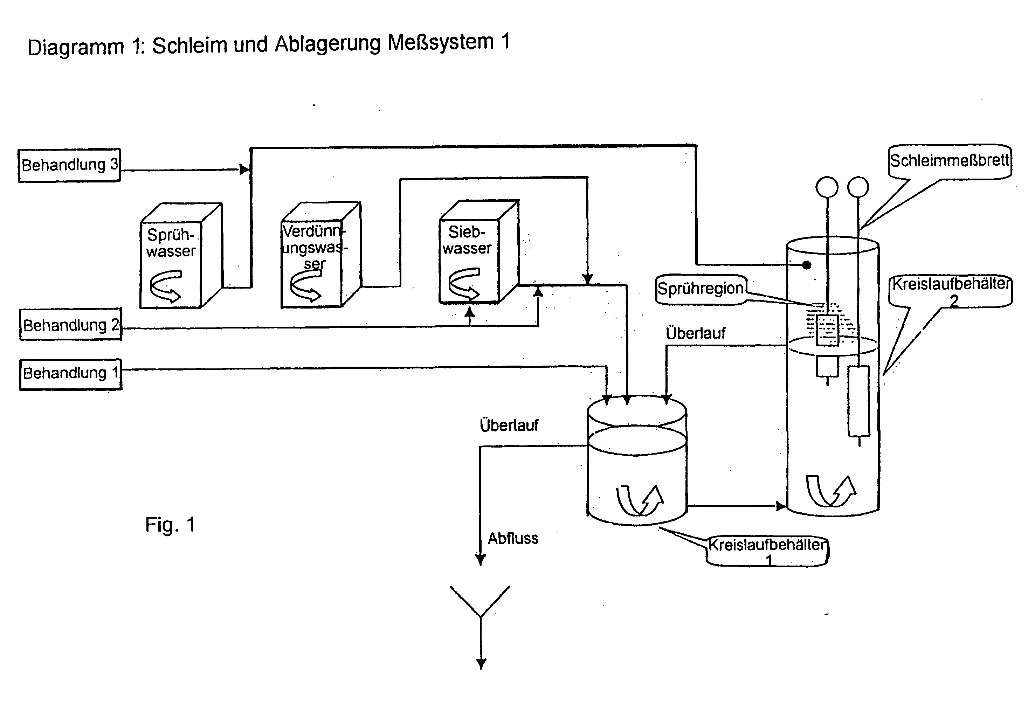

Es wurde eine Versuchsanlage gemäß dem Diagramm von Figur 1 verwendet wovon Teile und typische Abmessungen nachfolgend erörtert sind:
Kreislaufbehälter 1: 10 l Arbeitsvolumen, Pumpen zu Kreislauftank 2, bei ca. 100 l/h, wo Fließgeschwindigkeit und Strömung groß genug sind, um im Siebwasser befindliche Feststoffe in Suspension zu halten. Behälter verfügt über eine Thermostatheizung/ Temperaturkontrolle.
Kreislaufbehälter 2 (Schleimmeßbehälter): 10 l Arbeitsvolumen, im Kreislauf mit Behälter 1, mit Überlauf zurück in diesen Behälter. Der Behälter ist ausgerüstet mit jeweils einem oder mehreren ganz oder halb eingetauchten Schleimmeßbrettern, die aus Blättern aus dünnem Edelstahl bestehen und an einem feinen Draht aufgehängt sind. Der Behälter verfügt über einen freies Volumen über dem Flüssigkeitsniveau, das es erlaubt, eine geschlossene, halbgeschlossene oder offene Atmosphäre zu erzeugen. In dieser Kammer befinden sich ein Beleuchtungssystem und eine Sprühdüse, wobei das versprühte Wasser bei Verwendung auf die exponierten (nicht untergetauchten) Teile des oder der Schleimmeßbretter trifft.
Siebwasserbehälter: Ca. 200 l Fassungsvermögen, verfügt über einen Mixer, um Feststoffe im Siebwasser in Suspension zu halten. Siebwasser kann z.B. in einer Menge von 5 l/h mit einer kleinen Membranpumpe in Behälter 1 dosiert werden.
Verdünnungswasserbehälter: Ca. 200 l Fassungsvermögen. Kann mit Frischwasser oder einem ausgewählten Prozeßwasser befüllt werden.
Sprühwasserbehälter: Ca. 200 l Fassungsvermögen. Kann mit einem ausgewählten Prozeßwasser oder mit Frischwasser befüllt werden, oder Frischwasser direkt von der Leitung kann eingeleitet werden.
Sprühregion: Das freie Volumen in Kreislaufbehälter 2 simuliert eine Sprühregion einer Papiermaschine, in der hier die Luftfeuchtigkeit, Form des Sprays, Sprühflüssigkeit, Behandlung der Sprühflüssigkeit, Beleuchtung usw. beeinflußt werden können. Das ermöglicht es, Tendenzen in der Bildung von Schleim und Ablagerungen zu messen und die jeweilige Behandlung zu untersuchen.
Schleimmeßbretter: Dünne Blätter aus Edelstahl, die an einem feinen Draht befestigt sind; alle Bretter sind numeriert und ihr Gewicht ist bekannt. Können zum Wiegen oder zum Trocknen und Wiegen entfernt werden, um das Schleimwachstum zu bestimmen.
Behandlungssysteme: Die verschiedenen Behandlungszusätze werden, falls notwendig, geeignet verdünnt und durch kalibrierte peristaltische Pumpen an den benötigten Punkten dosiert.
Behandlung 1: Geeignet für Zugabe von schwefelfreiem Lignin oder seinen Derivaten, oder Mischungen davon mit Komplexbildnern. Die Dosierstelle befindet sich an Kreislaufbehälter 1.
Behandlung 2: Zusätzliches ergänzender Behälter, geeignet für Biozid, periodisch dosiert entweder in den Siebwasser-Behälter oder in die Leitung, die zu Kreislaufbehälter 1 führt.
Behandlung 3: Behandlung für Sprühwasser. Kann kontinuierlich, in periodischen Abständen usw. erfolgen. Behandlung kann aus schwefelfreiem Lignin oder seinen Derivaten bestehen, oder in einer Mischung desselben mit Komplexbildnern, Bioziden, Wasserstoffperoxid usw.

### Versuchsprotokoll

Siebwasser stammte aus dem Siebwasser I-Kreislauf einer Papiermaschine, die holzfreies Papier mit Carbonat-Füllstoff produziert, gestrichenen Ausschuß und Stärke zur Herstellung des Stoffs verwendet und bei leicht alkalischem pH läuft. Das Siebwasser wurde nach einem Neustart, bevor irgendwelche Schleimbekämpfungssysteme angewendet wurden, entnommen. Das Siebwasser hatte einen Feststoffgehalt von 3,8 g/l, von denen 2,8 g/l als Füllstoff (CaCO₃) bestimmt wurden. Der Siebwasserbehälter (unbeheizt), Kreislaufbehälter 1 und Kreislaufbehälter 2 wurden mit Siebwasser befüllt. Der Sprühwasserbehälter wurde mit Leitungswasser befüllt. Die Rührer für die Siebwasser- und Sprühwasserbehälter wurden eingeschaltet, ebenso die Pumpe zwischen Behälter 1 und Behälter 2, welche auf eine Flußgeschwindigkeit von ungefähr 100 Liter pro Stunde eingestellt wurden. Eine Pumpe, die Siebwasser aus dem Vorratsbehälter in den Kreislaufbehälter 1 beförderte, wurde eingeschalten und auf 1,5 l/h eingestellt. Ein entsprechendes Volumen floß daher vom Überfluß des Kreislaufbehälters 1 in den Abfluß. Die Heizung für den Kreislauf wurde auf eine Temperatur von 36°C eingestellt.

Sprühwasser von einem aus einer Hochdruckpumpe und einer Aerosoldüse bestehenden System wurde so eingestellt, daß sich bei einer Geschwindigkeit von 11/h ein feines Aerosol-Spray auf den oberen Teil von Kreislaufbehälter ergab. Das entsprechende Volumen floß wiederum durch den Überfluß des Kreislaufbehälters 1 in den Abfluß.

Nach 5 Tagen unter diesen Bedingungen wurden die teilweise eingetauchten Schleimmeßbretter von der Sprühregion von Kreislauftank 2 für die Analyse entfernt.

An und direkt über der Grenze zwischen Luft und Siebwasser bildete sich eine rosarot gefärbte Ablagerung. Die mikroskopische Analyse ergab, daß die Ablagerung aus einer verwobenen Masse filamentöser Bakterien bestand. Unter polarisiertem Licht war zu erkennen, daß sehr wenig Füllstoff in dem Schleim vorhanden war (Füllstoffe auf CaCO₃ -Basis erscheinen als helle weiße Punkte). Das Wachstum des Schleims erstreckte sich bis zu einem Zentimeter unter die Oberfläche des Siebwassers, wo ein allmählicher Übergang zu einer weißen Ablagerung stattfand. Diese weiße Ablagerung erstreckte sich gleichmäßig über den Rest der untergetauchten Oberfläche des Testbretts. Unter dem Mikroskop war zu erkennen, daß die Ablagerungen unter dem Wasser einen bedeutenden Anteil an Füllstoff enthielten. Der Schleim oberhalb der Wasseroberfläche wurde ebenso wie derjenige unter der Oberfläche für eine Analyse des Feststoffgehalts entfernt.

### Behandlung des Sprühwassers

In einem zweiten Experiment wurde die Versuchsanlage unter den selben Bedingungen wie oben aufgebaut, befüllt und gestartet, es wurde jedoch das Sprühwasser behandelt. Eine Lösung - mit einem Aktivgehalt von 0,1% - der Mischung aus carboxyliertem Lignin und Polyasparaginat aus Beispiel 6 wurde mit Leitungswasser hergestellt. Diese wurde mit 50 ml/h kontinuierlich in die Ansaug-Seite der Sprühwasser-Pumpe dosiert, was ein Behandlungsniveau von 50 ppm im Sprühwasser ergab.

Nach 5 Tagen unter diesen Bedingungen wurden die teilweise eingetauchten Schleimmeßbretter von der Sprühregion von Kreislauftank 2 für die Analyse entfernt.

An und direkt über der Grenze zwischen Luft und Siebwasser war eine leichte weißlich gefärbte Ablagerung vorhanden. Die mikroskopische Analyse ergab, daß die Ablagerung an und über der Luft-Wasser-Grenze fast keine filamentösen Bakterien enthielt und daß etwas Füllstoff vorhanden war. Unterwasser bedeckte eine weiße Ablagerung das Brett gleichmäßig. Die Ablagerungen wurden auf die selbe Weise analysiert wie diejenigen aus dem Versuch ohne Behandlung.

Die Ergebnisse sind in Tabelle 4 zusammengefasst.

**TABELLE 4**

| Typ | Zugabe (Aktiv) in ppm pro Volumen | Feststoffgehalt | Filamentöse Formen | Füllstoff (optisch-Mikroskop) |
|---|---|---|---|---|
| Schleim über der Wasseroberfläche unbehandeltes Sprühwasser | 0 | 19 | viele | Nicht viel, an vereinzelten Stellen |
| Schleim über der Wasseroberfläche behandeltes Sprühwasser | 50 | 14 | Sehr wenig | etwas |
| Schleim unter der Wasseroberfläche unbehandeltes Sprühwasser | 0 | 15 | Fast keine | Gleichmäßig verteilt |
| Schleim unter der Wasseroberfläche behandeltes Sprühwasser | 50 | 9 | keine | Gleichmäßig vertcilt |

In derjenigen Region, wo unbehandeltes Sprühwasser auf das Meßbrett traf, bestanden die Ablagerungen über der Wässeroberfläche aus Kolonien bildenden filamentösen Bakterien und ähneltem dem Schleim, der bekannterweise Probleme in der Papierherstellung mit sich bringt, weil die schlechte Dispergierbarkeit der Ablagerungen zu Flecken im Papier führen kann. Die Ablagerungen an und über der Wasseroberfläche aus dem Experiment, in dem das behandelte Sprühwasser verwendet worden war, wiesen keine solchen Kolonien filamentöser Bakterien auf und waren leichter zu dispergieren.

Die Ablagerungen auf dem Meßbrett unter der Wasseroberfläche waren in dem Versuch mit behandeltem Sprühwasser leichter zu dispergieren als jene aus dem Versuch ohne Behandlung; dies deutete darauf hin, daß eine Behandlung des Sprühwassers mit einer Lösung der Mischung aus schwefelfreiem, carboxyliertem Lignin und Polyasparaginat aus Beispiel 6 einen positiven Effekt auf die Reduktion von Ablagerungen auf Oberflächen unter der Wasseroberfläche im Kreislauf ausübt.

### Beispiel 14: Verminderung von Schleim und Ablagerungen in einem System, in dem Papiermaschinen-Siebwasser im Kreislauf geführt wird,durch Behandlung mit schwefelfreiem Lignin

Ein ähnliches Verfahren wie in Beispiel 10 wurde angewendet, um schwefelfreies Lignin und ein Lignosulfonat, das kommerziell erhältlich und als Mittel zur Kontrolle von Ablagerungen bestimmt ist, in Bezug auf ihren Effekt auf die Bildung von Schleim und Ablagerungen zu vergleichen.

Siebwasser, welches aus dem Siebwasser I-Kreislauf einer Papiermaschine, die Papier mit Carbonat-Füllstoff produzierte und bei leicht alkalischem pH lief, stammte, wurde zum Befüllen der Testbehälter verwendet. Das Siebwasser wurde nach einem Neustart, bevor irgendwelche Schleimbekämpfungssysteme angewendet wurden, entnommen. Das Siebwasser hatte einen Feststoffgehalt von 3,5 g/l, von denen 2,6 g als Füllstoff (CaCO₃) bestimmt wurden.

Drei Behälter wurden bis zur 5 Liter-Markierung mit dem Siebwasser befüllt, die Magnetrührer wurden eingeschalten, ebenso die thermostatgesteuerten Heizsysteme, welche auf 36°C eingestellt wurden. Gewogene Schleimmeßbretter wurden völlig in die Flüssigkeit getaucht. Die mikrobielle Aktivität in den Versuchsbehältern wurde durch Ausplattieren auf Keimzahl-Agar der Firma Merck überprüft. Die zu vergleichenden Produkte wurden in geeigneter Weise verdünnt und eine bestimmte Menge wurde zu jedem Versuchsbehälter zugegeben. Nach 72 Stunden wurden die Keimzahlen neu bestimmt. Die Meßbretter wurden vorsichtig entfernt. Wenn kein Wasser mehr abtropfte, wurde der Schleim vollständig abgekratzt und in Glasbecher überführt. Steriles Wasser wurde zugegeben und das Material aus den Ablagerungen geschüttelt, bis unter dem Mikroskop keine Klumpen oder Kolonien von Mikroorganismen mehr sichtbar waren und alles gleichförmig dispergiert war. Die resultierenden Supensionen wurden ausplattiert, um die Keimzahlen zu bestimmen. Dies wurde als Maß dafür angewendet, wie viele Mikroorganismen in den Ablagerungen auf den Meßbrettern vorhanden waren.

### Getestete Produkte:

1) kein Produkt (Kontrolle)
2) Lösung von schwefelfreiem Lignin aus Beispiel 9 (Lignin aus Holz)
3) Typ A, kommerzielle Lignosulfonat-Lösung, wie sie für die Schleimbekämpfung in Papiermaschinen angewendet wird

Die Ergebnisse sind in Tabelle 5 zusammengefasst.

**TABELLE 5**

| Behandlungsmittel | Zugabe (Aktiv) in ppm pro Volumen | Keimzahl im Siebwasser zu Beginn CFU/ml | Keimzahl im Siebwasser nach 72 h CFU/ml | Keimzahl aus den dispergierten Ablagerungen von der Menßbrettern nach 72 h CFU/ml |
|---|---|---|---|---|
| Keines | 0 | 3.6 × 10⁴ | 5.2 × 10⁵ | 7.7 × 10⁴ |
| schwefelfreies Lignin aus Beispiel 9 | 50 | " | 4.0 × 10⁵ | 1.6 × 10³ |
| Lignosulfonat A | 50 | " | 4.5 × 10⁵ | 2.1 × 10³ |

Wie aus der Tabelle 5 ersichtlich ist, ergaben das schwefelfreie Lignin-Produkt aus Beispiel 9 und das kommerzielle Lignin-Produkt eine zumindest ähnliche Verminderung der in den Ablagerungen vorhandenen Bakterienzahl im Vergleich zur Kontrolle.

Abschließend kann somit festgestellt werden, dass sich das erfindungsgemäße Verfahren erfolgreich im Siebwasserkreislauf einer Papiermaschine, am Sprühwassser einer Papiermaschine an der Stelle des Kontakts mit dem Kreislaufwasser, aber auch gewissermaßen zur Konservierung von in der Papierherstellung verwendeten Lösungen von Hilfsstoffen, zum Beispiel Stärke, Aufschlämmungen von Rohstoffen, zum Beispiel Füllstoffen, oder Papierausschuss verwendet werden. Die Anwendung zur Konservierung in den zu letzt genannten Fällen ist besonders vorteilhaft, weil dann bereits mit den Lösungen , Aufschlämmungen etc. der Wirkstoff mit in das System eingebracht wird.

## Patentansprüche

1. Verwendung eines wasserlöslichen, alkalischen, schwefelfreien Ligningderivates zur Herabsetzung der durch Mikroorganismen hervorgerufenen Bildung von Schleim und Ablagerungen in geschlossenen oder teilgeschlossenen wässrigen oder wasserführenden Systemen, wobei das schwefelfreie Ligninderivat dem jeweiligen System, bezogen auf den Gehalt an aktivem Produkt, in einer Menge von 0,1 g bis 1,8 g pro m³ Kreislaufwasser zugegeben wird.

2. Verwendung nach Anspruch 1, **dadurch gekennzeichnet, dass** carboxyliertes, phosphoniertes oder nitriertes schwefelfreies Lignin zugegeben wird.

3. Verwendung nach Anspruch 1 oder 2, **dadurch gekennzeichnet, dass** carboxyliertes schwefelfreies Lignin zugegeben wird.

## Claims

1. Use of a water-soluble, alkaline, sulfur-free lignine derivative for reducing formation of slime and deposits caused by micro-organisms in closed or partially closed aqueous or water bearing systems, wherein the sulfur-free lignine derivative is added to the reactive system in an amount of 0.1 g to 1.8 g per m³ circulating water, based on the content of active product.

2. Use according to claim 1, **characterized in that** carboxylated, phosphonated or nitrated sulfur free lignine is added.

3. Use according to claims 1 or 2, **characterized in that** carboxylated sulfur-free lignine is added.

## Revendications

1. Utilisation d'un dérivé de lignine exempt de soufre, alcalin, soluble dans l'eau, pour diminuer la formation de mucosité et de dépôts, provoquée par des micro-organismes, dans des systèmes aqueux ou assurant le guidage de l'eau, fermés ou partiellement fermés, où le dérivé de lignine exempt de soufre est ajouté au système respectif, en une quantité dans la plage de 0,1 g à 1,8 g par m³ d'eau en circulation, en se référant à la teneur en produit actif.

2. Utilisation selon la revendication 1, **caractérisée en ce que** l'on ajoute de la lignine exempte de soufre, carboxylée, phosphonée ou nitrurée.

3. Utilisation selon la revendication 1 ou 2, **caractérisée en ce que** l'on ajoute de la lignine exempte de soufre, carboxylée.
